(19) Europäisches Patentamt / European Patent Office / Office européen des brevets

(11) **EP 2 239 740 B1**

(12) **FASCICULE DE BREVET EUROPEEN**

(45) Date de publication et mention
de la délivrance du brevet:
**08.05.2013 Bulletin 2013/19**

(51) Int Cl.:
*G11B 27/34* *(2006.01)*     *G11B 27/28* *(2006.01)*
*G06F 17/30* *(2006.01)*     *G06F 3/048* *(2013.01)*

(21) Numéro de dépôt: **10305251.0**

(22) Date de dépôt: **12.03.2010**

(54) **Interaction entre un utilisateur et un contenu multimédia**

Interaktion zwischen einem Benutzer und einem Multimedia-Inhalt

Interaction between a user and multimedia content

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **13.03.2009 FR 0951617**

(43) Date de publication de la demande:
**13.10.2010 Bulletin 2010/41**

(73) Titulaire: **FRANCE TELECOM
75015 Paris (FR)**

(72) Inventeurs:
• **LEFEBVRE, Grégoire
38920 Crolles (FR)**
• **GIMENO, Agnès
38570 Tensin (FR)**

(56) Documents cités:
**EP-A- 1 377 047     US-A1- 2007 266 322
US-B1- 6 449 422     US-B1- 7 362 946**

**Description**

La présente invention concerne l'interaction entre un utilisateur et un contenu multimédia via une interface. L'invention concerne plus particulièrement l'accès à ou la sélection d'au moins une partie d'un contenu multimédia.

Un contenu multimédia peut être du texte, du son (ou de l'audio), des images, de la vidéo ou encore toute combinaison de ces différents éléments.

L'accroissement des capacités de stockage des terminaux et des débits de transmission dans les réseaux de télécommunications facilite l'accès des utilisateurs à des contenus multimédia. Parallèlement, le volume de contenus multimédias accessibles ne cesse de croître.

Dans ce contexte, accéder à ou sélectionner de l'information utile devient un enjeu majeur pour l'utilisateur dans le domaine de l'interaction entre un utilisateur et un contenu multimédia.

La création automatique de chapitres, la détermination du thème présenté, le résumé d'un contenu multimédia, etc. sont autant d'exemples qui permettent d'illustrer des réponses apportées à cet enjeu.

Une autre façon de répondre à cet enjeu est de faciliter la navigation de l'utilisateur dans un contenu multimédia.

Pour cela, l'utilisateur dispose de fonctionnalités de base comme accéder au début ou à la fin du contenu multimédia, le parcourir ou encore faire une pause. Par exemple, pour une vidéo ou un son, ces fonctionnalités sont nommées respectivement : avance rapide, retour rapide, lecture et pause. Les mêmes fonctionnalités sont disponibles pour du texte ou une image.

Ces fonctionnalités sont limitées. Hormis l'accès au début ou à la fin du contenu multimédia, il n'y a pas d'accès direct à une partie de ce contenu sans parcourir linéairement et intégralement tout ce qui précède (avance rapide) ou suit (retour rapide) cette partie.

Lorsque le contenu multimédia est accessible par l'utilisateur via une interface tactile, l'interaction entre l'utilisateur et le contenu multimédia requiert l'utilisation de gestes tactiles spécifiques.

Par exemple, un coup bref (équivalent d'un *flick gesture* en anglais) permet d'accéder au contenu multimédia suivant ou précédent, un geste de défilement (pour *scroll gesture* en anglais) permet le défilement dans une liste de données.

D'autres gestes spécifiques permettent la sélection d'une partie d'un contenu multimédia. Ces gestes peuvent être exécutés à partir d'un point ou de deux points de contact que l'utilisateur établit avec l'interface tactile.

Lorsqu'un seul point de contact est établi, le début de la sélection est déterminé par une pression soutenue exercée au point de contact, suivi d'un déplacement continu du point de contact sur la partie à sélectionner puis d'un relâchement de la pression pour spécifier la fin de la sélection.

Lorsque deux points de contact sont établis, la partie du contenu multimédia comprise entre ces deux points de contact constitue la sélection.

Le geste exécuté pour la sélection nécessite une précision dans le choix du début et de la fin de la sélection, précision qu'il n'est pas toujours facile d'obtenir notamment lorsque l'interface tactile est de taille réduite.

Ces deux modes de sélection ne permettent que la sélection continue d'une seule partie d'un contenu multimédia. Pour sélectionner plusieurs parties, il est nécessaire de répéter l'opération de sélection.

De plus, c'est à l'utilisateur de choisir les informations utiles pour réaliser la sélection.

Le document EP 1377 047 A2 décrit une interface utilisateur permettant à un utilisateur d'interagir avec une pluralité de courtes séquences vidéo ou « cliplets » affichées sous la forme d'une mosaïque. Lorsqu'il sélectionne un « cliplet » de la mosaïque, des métadonnées relatives à ce « cliplet » sont affichées dans une zone voisine de l'écran.

Le document US 7,362,946 B1 décrit un système d'édition automatique d'une séquence vidéo à partir d'une série de clips, qui assiste un utilisateur pour créer un montage à partir de clips qu'il a tournés. Il définit des règles pour découper un clip et ne garder que les scènes les plus intéressantes. Il décrit aussi le fait d'analyser la piste audio d'un clip ou d'une collection de clips pour identifier des zones d'intérêt à partir des pics audio d'un profil affiché sur l'écran d'un terminal.

Le document US 2007/0266322 A1 concerne un système de consultation de vidéos stockées sur un terminal. Un tel système comprend une interface utilisateur qui affiche une représentation statique des vidéos stockées sur le terminal sous la forme, par exemple, d'une image choisie comme représentative ou clé de chacune des vidéos (cf [0026]) et/ou une représentation dynamique de cette vidéo sous la forme d'un diaporama formé de plusieurs images clés de la vidéo sélectionnée (key frames). Lorsque l'utilisateur sélectionne par l'intermédiaire de l'interface soit la représentation statique (une image clé fixe), soit la représentation dynamique (le diaporama d'images clés), au moins une partie de la vidéo est jouée.

Un des buts de l'invention est de remédier aux inconvénients de l'art antérieur précité.

Ainsi, la présente invention concerne, selon un premier aspect, un procédé d'interaction entre un utilisateur et un contenu multimédia via une interface comportant une étape d'affichage sur ladite interface d'au moins une représentation de métadonnées relatives à l'intégralité du contenu multimédia, lesdites métadonnées correspondant à des informations utiles présentes dans le contenu multimédia et déterminées relativement à des critères prédéfinis,

- sur détection d'un contact établi par l'utilisateur avec l'interface en au moins un point de la représentation de métadonnées, sélection (E31, E32) d'au moins une partie du contenu multimédia correspondant audit au moins un point de la représentation de métadonnées.

L'affichage d'au moins une représentation de métadonnées relatives à l'intégralité du contenu multimédia permet à l'utilisateur de visualiser très rapidement où se situe l'information utile dans le contenu multimédia.

Selon une caractéristique préférée, la au moins représentation est une courbe d'intensité est une courbe à deux dimensions, l'une de ces dimensions représentant une progression dans le contenu multimédia et l'autre de ces dimensions représentant une intensité, laquelle courbe d'intensité présente des pics d'intensité.

Ainsi la courbe d'intensité permet à l'utilisateur, par l'intermédiaire des pics, de connaître la position de l'information utile dans l'intégralité du contenu multimédia.

Selon une caractéristique préférée, ladite au moins une représentation est un point clé et, lorsque l'utilisateur établit un contact avec l'interface en un point clé, une indication et/ou une réaction lui est notifiée en retour lui permettant d'accéder à la partie du contenu multimédia située au niveau de ce point clé.

Un point clé permet à l'utilisateur d'accéder à la partie du contenu multimédia correspondant à la position de ce point clé.

Les points clés et les courbes d'intensité peuvent être déterminés à partir des mêmes critères prédéfinis ou à partir de critères différents permettant ainsi une plus grande souplesse pour identifier l'information utile présente dans le contenu multimédia.

Les points clés et les courbes d'intensité peuvent être affichés en même temps. Ils peuvent en outre être déterminés à partir des mêmes critères prédéfinis ou à partir de critères différents permettant ainsi une plus grande souplesse pour identifier l'information utile présente dans le contenu multimédia.

Selon une caractéristique préférée, lorsque l'utilisateur établit un contact avec l'interface en au moins deux points, au moins un pic de la au moins une courbe d'intensité est déterminé en fonction de la localisation de ces au moins deux points sur l'interface et au moins une partie du contenu multimédia correspondant à ce au moins un pic est sélectionnée.

La présence de pics dans la courbe d'intensité permet une sélection directe par l'utilisateur des parties porteuses d'information utile correspondant à ces pics. L'utilisateur n'a pas besoin de parcourir le contenu multimédia dans son ensemble. Cette sélection s'effectue donc très rapidement, en une seule opération de sélection.

Selon une caractéristique préférée, lorsque l'utilisateur établit un contact avec l'interface en deux points situés sur un axe parallèle à la dimension représentant une progression dans le contenu multimédia, la partie du contenu multimédia comprise entre les intersections de la au moins une courbe d'intensité avec les axes passant respectivement par ces points de contact et parallèles à la dimension représentant l'intensité est sélectionné.

Ainsi, par l'intermédiaire de points de contact choisis, l'utilisateur peut sélectionner une partie continue du contenu multimédia sans tenir compte des pics d'intensité d'une courbe d'intensité.

Selon une caractéristique préférée, lorsque l'utilisateur établit un contact en un point de l'interface qui n'est pas un point clé, il accède à la partie du contenu multimédia située au niveau de l'intersection de la au moins une courbe d'intensité avec un axe passant par ce point de contact et parallèle à la dimension représentant l'intensité.

L'utilisateur peut ainsi accéder à une partie continue du contenu multimédia en tenant compte des pics d'intensité d'une courbe d'intensité.

Selon une caractéristique préférée, l'utilisateur peut sélectionner au moins une partie du contenu multimédia correspondant à une taille prédéfinie en établissant des contacts en un nombre quelconque de points positionnés sur l'interface puis en faisant varier le nombre et le positionnement de ces points de contact jusqu'à obtenir une partie du contenu multimédia de la taille prédéfinie.

Ainsi, l'utilisateur peut sélectionner une partie du contenu multimédia d'une taille prédéfinie.

Selon une caractéristique préférée, lorsque l'utilisateur parcourt la au moins une courbe d'intensité, le parcours est accompagné d'un retour dont la puissance permet d'identifier les pics de la au moins une courbe.

Ainsi, un retour approprié rend possible une identification non visuelle des pics de la courbe d'intensité.

L'invention concerne aussi un système d'interaction entre un utilisateur et un contenu multimédia via une interface comportant un module d'affichage sur une interface d'une représentation de métadonnées relatives à l'intégralité du contenu multimédia, correspondant à des informations utiles présentes dans le contenu multimédia et déterminées relativement à des critères prédéfinis et un module d'accès à au moins une partie du contenu multimédia, apte à être mis en oeuvre sur détection d'un contact établi par l'utilisateur avec l'interface en au moins un point de la représentation de métadonnées, ladite partie du contenu multimédia correspondant audit au moins un point de la représentation de métadonnées.

L'invention concerne encore un produit programme d'ordinateur comprenant des instructions de code de programme enregistrées sur ou transmises par un support lisible par un ordinateur, pour mettre en oeuvre les étapes du procédé décrit ci-dessus lorsque ledit programme est mis en oeuvre sur ordinateur.

L'invention concerne également un terminal apte à recevoir un système tel que décrit précédemment.

D'autres caractéristiques et avantages de la présente invention apparaîtront dans la description ci-après de modes de réalisation préférés décrits en référence aux figures dans lesquelles :

- la figure 1 représente un mode de réalisation d'un procédé d'interaction entre un utilisateur et un contenu multimédia via une interface,
- les figures 2a, 2b, 2c et 2d illustrent un affichage de métadonnées et un contenu multimédia correspondant, respectivement texte, audio, image et vidéo,
- la figure 3 illustre un exemple d'accès à une partie d'un contenu multimédia par l'intermédiaire d'une courbe d'intensité,
- les figures 4 à 8 illustrent des exemples de sélection d'au moins une partie d'un contenu multimédia,
- la figure 9 représente un mode de réalisation d'un système apte à mettre en oeuvre le procédé de la figure 1.

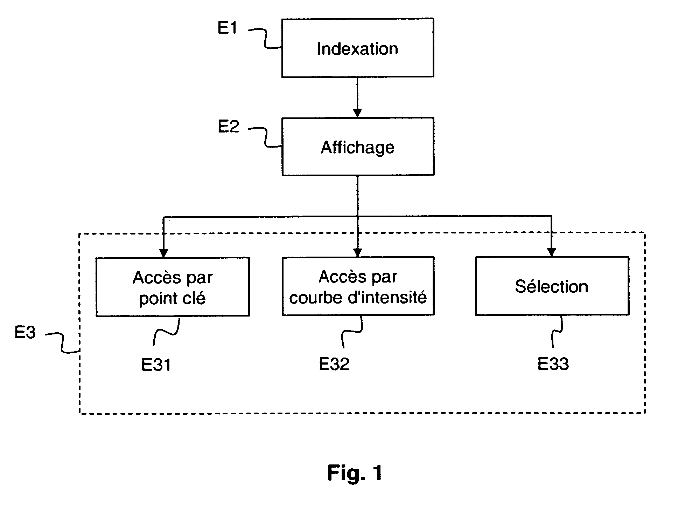

La **figure 1** représente un mode de réalisation d'un procédé d'interaction entre un utilisateur et un contenu multimédia via une interface.

L'étape E1 est une étape d'indexation d'un contenu multimédia.

Au cours de cette étape, on détermine des métadonnées à partir du contenu multimédia considéré. Ces métadonnées sont déterminées en fonction d'informations utiles pour l'utilisateur présentes dans le contenu multimédia et relativement à des critères prédéfinis.

Ces métadonnées peuvent être représentées par des points clés et/ou des courbes d'intensité.

Un point clé correspond à une partie du contenu multimédia porteuse d'information utile pour l'utilisateur. Les points clés d'un contenu multimédia sont définis relativement à des critères prédéfinis.

Une courbe d'intensité est une courbe à deux dimensions, l'une de ces dimensions représentant la progression dans le contenu multimédia et l'autre dimension représentant une intensité (par exemple, sonore, cinématique, émotionnelle, etc.). Cette courbe comporte des pics correspondant à des informations utiles et des creux correspondant à des informations de moindre utilité pour l'utilisateur. Une courbe d'intensité est définie relativement à des critères prédéfinis.

Les critères prédéfinis permettant de déterminer les points clés d'un contenu multimédia peuvent être les mêmes ou différents de ceux permettant de déterminer une courbe d'intensité pour ce contenu multimédia. Plusieurs courbes d'intensité peuvent être déterminées pour un contenu multimédia à partir de critères prédéfinis différents.

Les points clés et les courbes d'intensité sont deux modes de représentation de métadonnées déterminées en fonction de l'information utile présente dans le contenu multimédia considéré et à partir de critères prédéfinis.

A titre d'illustration, des exemples de points clés et de courbes d'intensité sont donnés ci-après selon la nature du contenu multimédia. Ces exemples ne peuvent pas être considérés comme limitatifs de l'invention.

Lorsque le contenu multimédia est un texte, les points clés peuvent être, par exemple, des mots clés. La courbe d'intensité peut illustrer la structure du document (par exemple, introduction, chapitre, paragraphe, annexe, etc.), une variation d'importance de chaque paragraphe selon un sujet prédéfini, etc.

Lorsque le contenu multimédia correspond à du son, les points clés peuvent être des sonorités, des accords, des notes, des mots prononcés, etc. La courbe d'intensité peut, par exemple, illustrer un volume sonore.

Lorsque le contenu multimédia est une image, les points clés peuvent être, par exemple, des points d'intérêt dans l'image. La courbe d'intensité peut illustrer un histogramme colorimétrique des pixels de l'image, une probabilité de présence ou d'absence d'un objet dans l'image, etc.

Lorsque le contenu multimédia est une vidéo, les points clés peuvent être des mots prononcés, des sonorités, etc. La courbe d'intensité peut, par exemple, illustrer une intensité émotionnelle correspondant à une action décrite dans la vidéo. L'intensité émotionnelle peut être décrite par un volume sonore, des battements cardiaques, un suivi d'objets en mouvement dans la vidéo, etc.

La détermination de points clés et de courbes d'intensité utilise des techniques connues pour le contenu multimédia considéré. Par exemple, lorsque le contenu multimédia est une vidéo ou du son et que les points clés sont des mots prononcés, la détermination de ces points clés repose sur une technique de reconnaissance de mots dans un fichier son, encore appelée *word spotting* en anglais.

Cette étape d'indexation du contenu multimédia peut être entièrement automatique. En variante, l'utilisateur peut intervenir dans l'étape d'indexation du contenu multimédia pour apporter des corrections ou identifier de nouvelles informations utiles relativement au contenu multimédia considéré.

Les métadonnées obtenues au cours de l'étape E1 sont enregistrées dans une base de données.

L'étape suivante E2 est une étape d'affichage de métadonnées.

Les métadonnées déterminées au cours de l'étape précédente E1 et le contenu multimédia correspondant ou une représentation de celui-ci sont affichés sur une même interface.

L'interface permet à un utilisateur de visualiser le contenu multimédia considéré ou une représentation de celui-ci et les métadonnées représentées sous forme de points clés et/ou de courbes d'intensité. A titre d'exemple non limitatif de l'invention, les métadonnées sont affichées en transparence et superposées au contenu multimédia.

L'affichage des métadonnées peut être réalisé par défaut au moment où l'utilisateur accède au contenu multimédia ou être réalisé à n'importe quel moment à la demande de l'utilisateur, par exemple, par l'intermédiaire d'un menu, par un geste tactile spécifique, etc.

L'utilisateur peut agir sur les métadonnées via l'interface. A titre d'exemple non limitatif de l'invention, l'interface peut être une interface tactile sur laquelle l'utilisateur agit par l'intermédiaire d'un ou plusieurs doigts, d'un ou plusieurs stylets, etc.

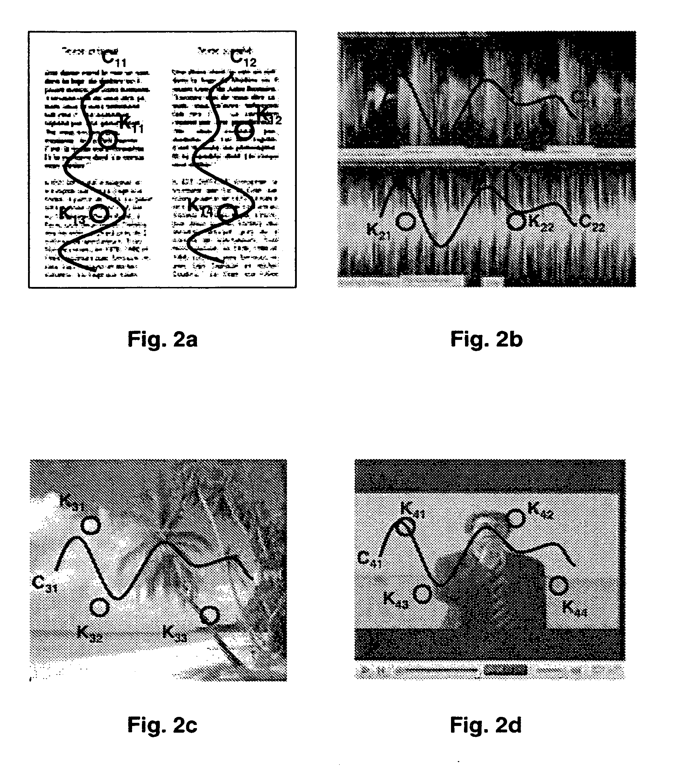

Les **figures 2a, 2b, 2c et 2d** illustrent un affichage de métadonnées et un contenu multimédia correspondant, respectivement texte, audio, image et vidéo.

Pour mémoire, les métadonnées sont représentées par des points clés et/ou des courbes d'intensité.

Les points clés, représentés par des cercles noirs, et/ou les courbes d'intensité, représentées par des courbes noires, ainsi que le contenu multimédia apparaissent sur l'interface.

Par exemple, à la figure 2a correspondant à un contenu multimédia texte, on compte quatre points clés $K_{11}$, $K_{12}$, $K_{13}$ et $K_{14}$ qui peuvent correspondre, par exemple, à quatre occurrences d'un mot clé et deux courbes d'intensité $C_{11}$ et $C_{12}$.

Les courbes d'intensité, représentées par des courbes noires, représentent l'évolution d'une intensité en fonction de la progression du contenu multimédia.

A la figure 2b, correspondant à un contenu multimédia son, on compte deux points clés $K_{21}$ et $K_{22}$ et deux courbes d'intensité $C_{21}$ et $C_{22}$.

A la figure 2c, correspondant à un contenu multimédia image, on compte trois points clés $K_{31}$, $K_{32}$ et $K_{33}$ et une courbe d'intensité $C_{31}$.

Sur la figure 2d correspondant à un contenu multimédia de type vidéo, on compte quatre points clés $K_{41}$, $K_{42}$, $K_{43}$ et $K_{44}$ et une courbe d'intensité $C_{41}$.

Les points clés et/ou les courbes d'intensité affichés représentent tout le contenu multimédia alors qu'en transparence ce n'est qu'une partie de celui-ci qui apparaît (par exemple, une page d'un document texte, une image d'une vidéo, etc.).

L'étape suivante E3 est une étape d'accès à et/ou de sélection d'au moins une partie d'un contenu multimédia.

Cette étape E3 comporte trois opérations E31, E32 et E33 illustrant chacune un mode d'accès à et/ou de sélection d'au moins une partie du contenu multimédia considéré.

L'opération E31 est un accès à une partie d'un contenu multimédia par l'intermédiaire d'un point clé.

Tel que cela a été décrit à l'étape précédente E2, les points clés et le contenu multimédia sont affichés sur une même interface.

L'utilisateur peut agir sur les points clés affichés, par exemple en établissant un contact avec l'interface au niveau du point clé considéré. Une telle action peut, par exemple, correspondre à une activation ou à une inhibition d'un point clé.

En retour à cette action, une indication (visuelle, sonore, tactile, etc.) peut être émise et/ou une réaction peut être produite à destination de l'utilisateur en provenance du point clé sur lequel l'utilisateur a agi.

L'indication émise et/ou la réaction produite permettent à l'utilisateur d'accéder à la partie du contenu multimédia correspondant au point clé sur lequel il a agi.

Les exemples ci-dessous d'indication et/ou de réaction à destination de l'utilisateur en provenance d'un point clé sont donnés à titre illustratif et ne peuvent pas être considérés comme limitatifs de l'invention.

Lorsque le contenu multimédia est du texte, la réaction produite et/ou l'indication émise peut être respectivement une proposition de recentrage du texte autour du point clé et/ou l'affichage d'une définition du mot clé correspondant, d'une adresse web, etc.

Dans le cas d'un contenu multimédia de type son (ou vidéo), un commentaire (textuel, sonore ou autre) correspondant à une sonorité détectée peut être affiché. La lecture du son (ou de la vidéo) peut aussi être positionnée au moment correspondant à l'apparition de la sonorité dans le contenu multimédia considéré.

Pour une image, la réaction et l'indication peuvent être respectivement un zoom sur une région d'intérêt identifiée par la présence d'un point clé et l'affichage d'un commentaire.

L'opération E32 est un accès à une partie d'un contenu multimédia par l'intermédiaire d'une courbe d'intensité.

Tel que décrit à l'étape précédente E2, la courbe d'intensité et le contenu multimédia sont affichés sur une même interface.

La courbe d'intensité permet à l'utilisateur, à partir des pics qu'elle comporte, d'accéder à la partie du contenu multimédia correspondant à ces pics. Ces pics correspondent à de l'information utile présente dans le contenu multimédia. L'utilisateur peut également accéder à des parties d'intérêt moindre, à partir des creux ou d'autres parties de la courbe d'intensité.

Cet accès est plus direct, plus facile et plus rapide qu'un accès linéaire en parcourant le contenu multimédia. On rappelle qu'actuellement la navigation dans un contenu multimédia tel que du son ou de la vidéo est linéaire et offre les fonctionnalités d'avance rapide, retour rapide, lecture et pause.

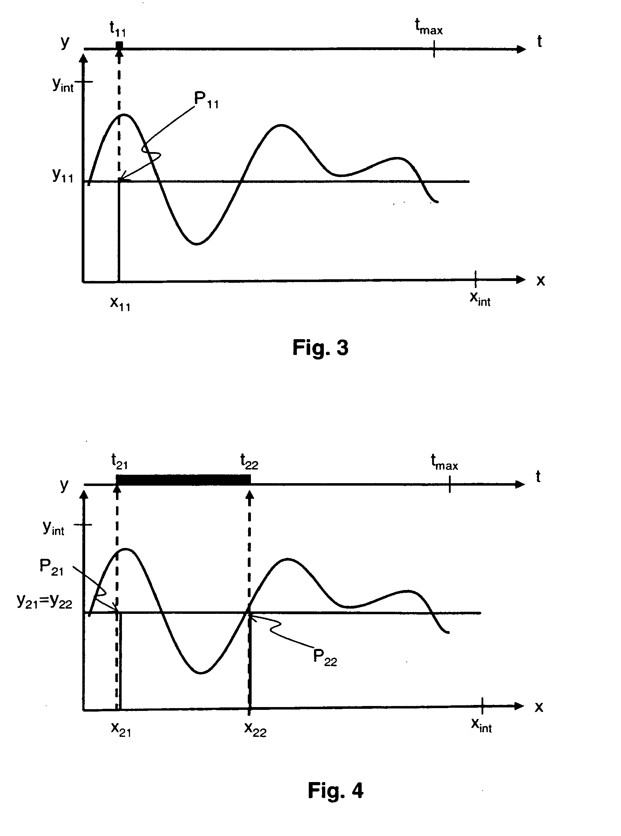

La **figure 3** illustre un exemple d'accès à une partie d'un contenu multimédia par l'intermédiaire d'une courbe d'intensité.

Les conventions de notation retenues pour décrire ci-après la figure 3, le sont également pour les figures suivantes.

On définit un jalon maximal $t_{max}$ pour le contenu multimédia considéré définissant la taille de celui-ci. Ce jalon est défini en fonction de la nature du contenu multimédia. Ce jalon $t_{max}$ est positionné sur un axe t correspondant à la progression du contenu multimédia.

Par exemple, lorsque le contenu multimédia est du son ou une vidéo, ce jalon maximal peut correspondre à la durée de ce contenu. Par exemple aussi, lorsque le contenu multimédia est du texte, ce jalon maximal peut être la taille du texte exprimée en nombre de caractères, de mots, etc. Par exemple encore, lorsque le contenu multimédia est une image, ce jalon maximal peut être la hauteur ou la largeur de l'image. Ces exemples sont donnés à titre illustratif et ne peuvent pas être considérés comme limitatifs de l'invention.

On définit deux axes x et y dans le sens respectivement de la largeur et de la hauteur de l'interface sur laquelle sont affichés notamment le contenu multimédia, les points clés et la courbe d'intensité. La largeur et la hauteur de l'interface sont définies respectivement par $x_{int}$ et $y_{int}$.

On considère que l'utilisateur peut entrer en contact avec l'interface en N points.

En référence à la figure 3, l'utilisateur entre en contact avec l'interface en un point $P_{11}$ de coordonnées $(x_{11}, y_{11})$ relativement aux axes respectifs x et y dans le sens de la largeur et de la hauteur de l'interface.

La correspondance entre l'abscisse $x_{11}$ et un jalon $t_{11}$ dans la progression du contenu multimédia est définie par :

$$t_{11} = \frac{t_{max} \ast x_{11}}{x_{int}}$$

où

- $t_{11}$ est un jalon dans la progression du contenu multimédia, de même type que $t_{max}$ (temps, nombre de mots, etc.) et inférieur ou égal à $t_{max}$,
- $x_{int}$ est la largeur de l'interface.

Ce contact permet d'accéder directement à la partie du contenu multimédia au niveau du jalon $t_{11}$ ainsi obtenu et de positionner le déroulement du contenu multimédia au niveau de ce jalon $t_{11}$.

En variante, plusieurs courbes d'intensité, chacune déterminées à partir de critères prédéfinis peuvent être utilisées pour accéder à une partie du contenu multimédia.

En variante, l'utilisateur peut également avoir la possibilité de parcourir la courbe d'intensité par l'intermédiaire d'un point de contact avec l'interface.

Lors de ce parcours, un retour visuel (par exemple, un changement de couleur de la courbe), un retour sonore (par exemple, une mélodie), un retour tactile (par exemple, une modulation de vibration), etc. peut s'opérer à destination de l'utilisateur. La puissance de ce retour (par exemple, le niveau sonore, l'amplitude de la vibration, etc.) peut permettre à l'utilisateur d'identifier les pics de la courbe d'intensité.

Par exemple, si l'utilisateur est déficient visuel et si le parcours de la courbe est accompagné d'un retour sonore ou tactile, cet utilisateur peut facilement identifier les pics de la courbe d'intensité.

L'opération E33 est une sélection d'au moins une partie d'un contenu multimédia.

La sélection d'au moins une partie d'un contenu multimédia est effectuée à partir de la courbe d'intensité.

A partir de cette sélection, une ou plusieurs parties du contenu multimédia peuvent être extraites permettant de réaliser, par exemple, des découpages, un résumé, etc. de ce contenu.

Les **figures 4 à 8** illustrent des exemples de sélection d'au moins une partie d'un contenu multimédia.

Les conventions de notation retenues pour décrire les figures 4 à 8 sont les mêmes que celles décrites ci-dessus pour la figure 3.

En référence aux figures 4, 5 et 6, l'utilisateur établit un contact avec l'interface en deux points.

A la figure 4, les deux points de contact $P_{21}$ et $P_{22}$ de coordonnées respectives $(x_{21}, y_{21})$ et $(x_{22}, y_{22})$ sont situés sur un axe parallèle à l'axe des abscisses x. Cet axe est également parallèle à l'axe t de déroulement du contenu multimédia.

Ces deux points de contact permettent de sélectionner la partie du contenu multimédia située à l'intérieur de deux axes parallèles à l'axe des y, l'un passant par $x_{21}$ et l'autre passant par $x_{22}$.

La partie du contenu multimédia sélectionnée correspond à l'intervalle $[t_{21}, t_{22}]$ délimité par les jalons correspondants.

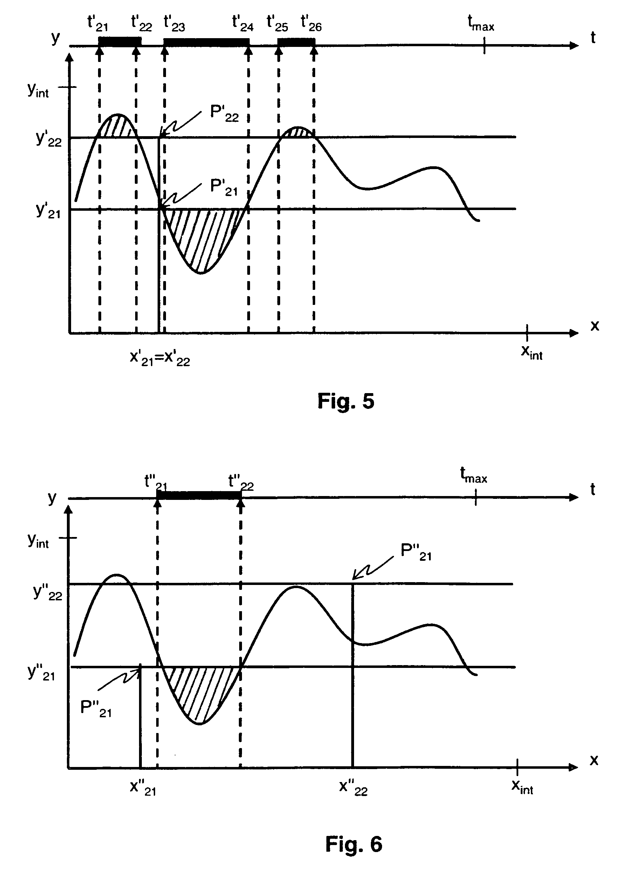

A la figure 5, les deux points de contact $P'_{21}$ et $P'_{22}$ de coordonnées respectives $(x'_{21}, y'_{21})$ et $(x'_{22}, y'_{22})$ sont situés sur un axe parallèle à l'axe des ordonnées y.

Ces deux points de contact permettent de sélectionner la partie ou les parties du contenu multimédia correspondant aux pics de la courbe d'intensité situés en dessous d'un axe parallèle à l'axe des x et passant par $y_{21}$ et au dessus d'un axe parallèle à l'axe des x et passant par $y_{22}$. Ces pics sont représentés par les parties hachurées de la figure 5.

La partie du contenu multimédia sélectionnée correspond aux intervalles $[t'_{21}, t'_{22}]$, $[t'_{23}, t'_{24}]$ et $[t'_{25}, t'_{26}]$ délimités par les jalons correspondants.

A la figure 6, les deux points de contact $P''_{21}$ et $P''_{22}$ de coordonnées respectives $(x''_{21}, y''_{21})$ et $(x''_{22}, y''_{22})$ sont quelconques.

Ces deux points de contact permettent de sélectionner la partie ou les parties du contenu multimédia correspondant aux pics de la courbe d'intensité situés à l'intérieur de deux axes parallèles à l'axe des y, l'un passant par $x''_{21}$ et l'autre passant par $x''_{22}$, et à l'extérieur de deux axes parallèles à l'axe des x, l'un passant par $y''_{21}$ et l'autre passant par $y''_{22}$. Ces pics sont représentés par les parties hachurées de la figure 6.

La partie du contenu multimédia sélectionnée correspond à l'intervalle $[t''_{21}, t''_{22}]$ délimité par les jalons correspondants.

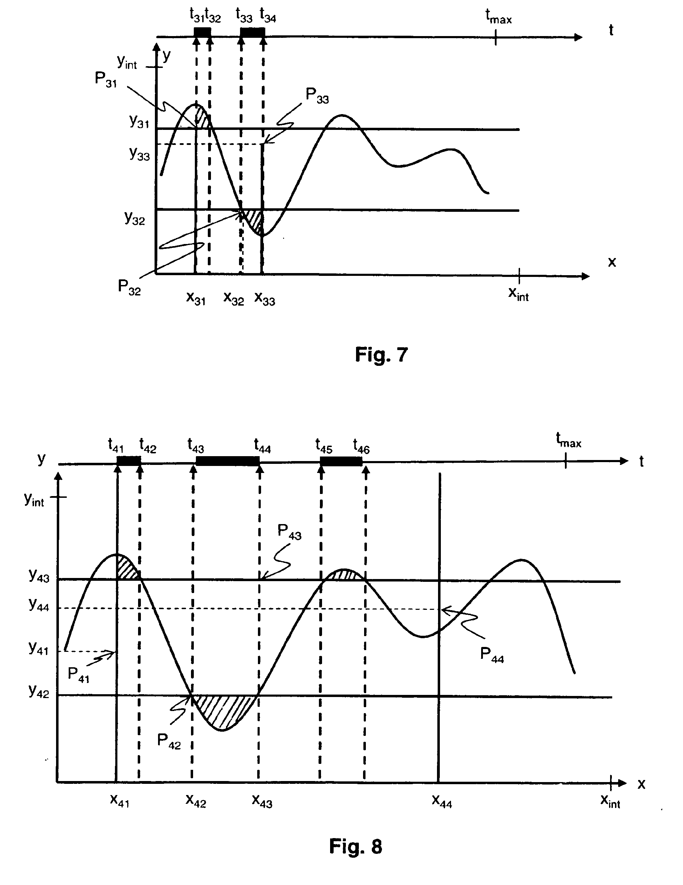

En référence à la figure 7, l'utilisateur entre en contact avec l'interface en trois points de contact $P_{31}$, $P_{32}$ et $P_{33}$ de coordonnées respectives $(X_{31}, y_{31})$, $(x_{32}, y_{32})$ et $(x_{33}, y_{33})$.

Ces trois points de contact permettent de sélectionner la partie ou les parties du contenu multimédia correspondant aux pics de la courbe d'intensité situés à l'intérieur de deux axes parallèles à l'axe des y, l'un passant par $x_{31}$ et l'autre passant par $x_{33}$, et à l'extérieur de deux axes parallèles à l'axe des x, l'un passant par $y_{32}$ et l'autre passant par $y_{31}$. Ces pics sont représentés par les parties hachurées de la figure 7.

La partie du continu multimédia sélectionnée correspond aux intervalles $[t_{31}, t_{32}]$ et $[t_{33}, t_{34}]$ délimités par les jalons correspondants.

En référence à la figure 8, l'utilisateur entre en contact avec l'interface en quatre points de contact $P_{41}$, $P_{42}$, $P_{43}$ et $P_{44}$ de coordonnées respectives $(x_{41}, y_{41})$, $(x_{42}, y_{42})$, $(x_{43}, y_{43})$ et $(x_{44}, y_{44})$.

Ces quatre points de contact permettent de sélectionner la partie ou les parties du contenu multimédia correspondant aux pics de la courbe d'intensité situés à l'intérieur de deux axes parallèles à l'axe des y, l'un passant par $x_{41}$ et l'autre passant par $x_{44}$, et à l'extérieur de deux axes parallèles à l'axe des x, l'un passant par $y_{42}$ et l'autre passant par $y_{43}$. Ces pics sont représentés par les parties hachurées de la figure 8.

La partie du continu multimédia sélectionnée correspond aux intervalles $[t_{41}, t_{42}]$, $[t_{43}, t_{44}]$ et $[t_{45}, t_{46}]$ délimités par les jalons correspondants.

Par analogie, il est possible d'étendre la démonstration à N points de contact avec N supérieur à 4.

Ces N points de contact permettent de sélectionner la partie ou les parties du contenu multimédia correspondant aux pics de la courbe d'intensité situés à l'intérieur d'un rectangle défini par quatre points parmi les N points. Ces quatre points correspondent d'une part au point le plus proche et au point le plus éloigné de l'axe des abscisses x et d'autre part au point le plus proche et au point le plus éloigné de l'axe des ordonnées y.

L'utilisateur peut également choisir de sélectionner une partie ou des parties du contenu multimédia correspondant à une taille $D_{sélection}$ prédéfinie.

La taille peut s'exprimer en temps, en nombre de caractères, etc. en fonction de la nature du contenu multimédia considéré. Par exemple, pour un contenu multimédia de type vidéo, l'utilisateur peut vouloir sélectionner 5 minutes de cette vidéo.

Pour cela, l'utilisateur établit un contact avec l'interface en un nombre N quelconque et variable de points. La taille de la partie du contenu multimédia s'affiche alors sur l'interface. L'utilisateur fait ensuite varier le nombre et le positionnement des points de contact jusqu'à ce que la taille sélectionnée affichée soit égale à la taille $D_{séiection}$ prédéfinie.

Ainsi, la sélection d'une partie ou de parties du contenu multimédia correspondant à une taille $D_{séletion}$ prédéfinie comporte la détermination de N points au niveau desquels l'utilisateur doit entrer en contact avec l'interface.

Tout d'abord, on détermine deux axes parallèles à l'axe des abscisses x tels que les pics de la courbe d'intensité présents au-delà de ces axes sont délimités par des jalons $t_k$ et $t_{k+1}$, formant des intervalles $[t_k , t_{k+1}]$, tels que :

$$D_{sélection} = \sum_k t_{k+1} - t_k \; .$$

Les deux axes parallèles à l'axe des x sont deux droites définies par les équations $y = y_1$ et $y = y_2$.

Ensuite, on détermine les m abscisses $x_i$ (avec i variant de 1 à m, m étant un nombre entier) des points d'intersection entre la courbe d'intensité que l'on convient de noter $y = f(x)$ avec les deux droites précédemment définies.

On considère $S = \bigcup_k \left[ t_{k+1} - t_k \right]$ l'ensemble des intervalles formés par les jalons satisfaisant les conditions énoncées ci-dessus.

On considère $E = \{x_i\}$, avec i variant de 1 à m, l'ensemble des abscisses satisfaisant les conditions ci-dessus.

On peut alors déterminer les N points de contact, de coordonnées $(x_j, y_j)$ avec j variant de 1 à N, que l'utilisateur doit établir avec l'interface pour sélectionner une partie ou des parties du contenu multimédia correspondant à une taille $D_{sélection}$ prédéfinie. Ces points sont tels que l'une des droites définies par les équations $y = y_1$ et $y = y_2$ passe par le point le plus proche de l'axe des x et l'autre droite passe par le point le plus éloigné de l'axe des x.

On obtient alors :

$$\forall t_i \in S \Leftrightarrow t_i = \frac{t_{max} * x_i}{x_{int}}$$

$$x_i \in E \Leftrightarrow \begin{cases} x_i \geq \min_N(x_j) \\ x_i \leq \max_N(x_j) \\ f(x_i) \leq \min_N(y_j) \\ f(x_i) \geq \max_N(y_j) \end{cases}$$

où :

- $t_{max}$ correspond à la taille du contenu multimédia considéré,
- $x_{int}$ est la largeur de l'interface,
- $x_j$, $y_j$ avec j variant de 1 à N sont les coordonnées des N points de contact.

En variante, plusieurs courbes d'intensité, chacune déterminées à partir de critères prédéfinis peuvent être utilisées pour sélectionner au moins une partie d'un contenu multimédia.

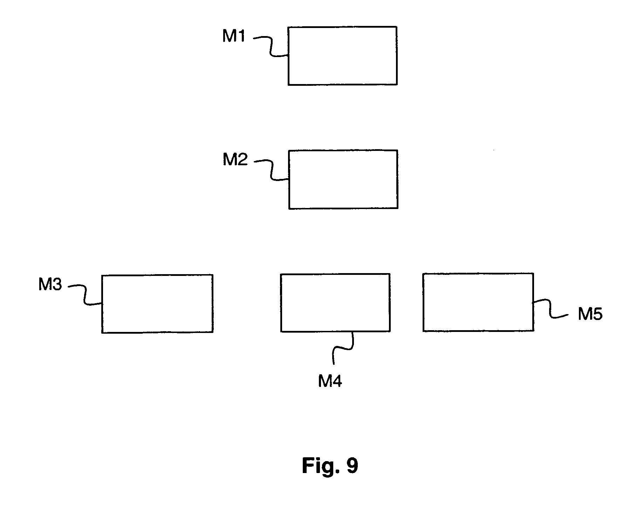

La figure 9 représente un mode de réalisation d'un système apte à mettre en oeuvre un procédé d'interaction entre un utilisateur et un contenu multimédia via une interface tel que décrit ci-dessus.

Le système comporte un module M1 d'indexation d'un contenu multimédia tel que décrit à l'étape E1 ci-dessus.

Un tel module permet d'obtenir à partir du contenu multimédia considéré des points clés et/ou des courbes d'intensité.

En référence à l'étape E2, le système comporte un module M2 permettant l'affichage sur une interface de points clés et/ou de courbes d'intensité obtenus grâce au module M1.

En référence à l'opération E31, le système comprend un module M3 d'accès à une partie d'un contenu multimédia par l'intermédiaire d'un point clé.

En référence à l'opération E32, le système comprend également un module M4 d'accès à une partie d'un contenu multimédia par l'intermédiaire d'une courbe d'intensité.

Le système comprend aussi un module M5 de sélection d'au moins une partie d'un contenu multimédia tel que décrit par l'opération E33.

Le système comprend en outre une unité centrale de commande, non représentée, connectée à chacun des modules M1 à M5 et adaptée pour commander leur fonctionnement.

Les modules M1 à M5 peuvent être des modules logiciels formant un programme d'ordinateur. L'invention concerne donc également un programme d'ordinateur pour un système d'interaction entre un utilisateur et un contenu multimédia via une interface comprenant des instructions de code de programme pour faire exécuter le procédé précédemment décrit par le système.

Les différents modules logiciels peuvent être stockés dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

L'invention concerne également un terminal apte à recevoir un système tel que décrit précédemment.

La présente invention trouve des applications dans la recherche d'information dans des contenus multimédia, notamment des contenus audiovisuels, dans la gestion de collection de vidéos pour des besoins individuels ou industriels, dans le découpage-montage de films facilité par l'interaction gestuelle, etc.

Elle trouve également des applications dans le domaine de la vidéo interactive, les jeux, les télécommandes tactiles, etc.

**Revendications**

1. Procédé d'interaction entre un utilisateur et un contenu multimédia via une interface tactile, **caractérisé en ce qu'**il comporte les étapes suivantes :

- affichage (E2) sur ladite interface d'au moins une représentation de métadonnées relatives à l'intégralité du contenu multimédia, ladite représentation comprenant au moins une courbe d'intensité à deux dimensions, l'une de ses dimensions représentant une progression dans le contenu multimédia et l'autre de ses dimensions représentant une intensité, ladite courbe étant définie relativement à des critères prédéfinis et comportant des pics correspondant à des informations utiles pour l'utilisateur et des creux correspondant à des informations de moindre utilité pour l'utilisateur,
- lorsque l'utilisateur établit un contact avec l'interface en au moins deux points, détermination d'au moins un pic de la au moins une courbe d'intensité en fonction de la localisation de ces au moins deux points sur l'interface et sélection d'au moins une partie du contenu multimédia correspondant à ce au moins un pic (E33).

2. Procédé selon la revendication 1, **caractérisé en ce que**, lorsque l'utilisateur établit un contact avec l'interface en deux points situés sur un axe parallèle à la dimension représentant une progression dans le contenu multimédia, la partie du contenu multimédia comprise entre les intersections de la au moins une courbe d'intensité avec les axes passant respectivement par ces points de contact et parallèles à la dimension représentant l'intensité est sélectionné.

3. Procédé selon la revendication 1, **caractérisé en ce que**, lorsque l'utilisateur établit un contact en un point de l'interface qui n'est pas un point de la au moins une courbe d'intensité, il accède à la partie du contenu multimédia située au niveau de l'intersection de la au moins une courbe d'intensité avec un axe passant par ce point de contact et parallèle à la dimension représentant l'intensité.

4. Procédé selon la revendication 1, **caractérisé en ce que** l'utilisateur peut sélectionner au moins une partie du contenu multimédia correspondant à une taille prédéfinie en établissant des contacts en un nombre quelconque de points positionnés sur l'interface puis en faisant varier le nombre et le positionnement de ces points de contact jusqu'à obtenir une partie du contenu multimédia de la taille prédéfinie.

5. Procédé selon la revendication 1, **caractérisé en ce que** lorsque l'utilisateur parcourt la au moins une courbe d'intensité, le parcours est accompagné d'un retour dont la puissance permet d'identifier les pics de la au moins une courbe.

6. Système d'interaction entre un utilisateur et un contenu multimédia via une interface, **caractérisé en ce qu'**il comporte les modules suivants :

- affichage (M2) sur une interface d'une représentation de métadonnées relatives à l'intégralité du contenu multimédia, ladite représentation comprenant au moins une courbe d'intensité à deux dimensions, l'une de ses dimensions représentant une progression dans le contenu multimédia et l'autre de ses dimensions représentant une intensité, ladite courbe comportant des pics correspondant à des informations utiles pour l'utilisateur présentes dans le contenu multimédia et déterminées relativement à des critères prédéfinis,

- sélection (M5) d'au moins une partie du contenu multimédia correspondant à au moins un pic de la au moins une courbe d'intensité, ledit au moins pic étant déterminé en fonction de la localisation de ces au moins deux points sur l'interface, ledit module étant apte à être mis en oeuvre lorsque l'utilisateur établit un contact avec l'interface en au moins deux points.

7. Produit programme d'ordinateur comprenant des instructions de code de programme enregistrées sur ou transmises par un support lisible par un ordinateur, pour mettre en oeuvre les étapes du procédé selon la revendication 1 lorsque ledit programme est mis en oeuvre par un ordinateur.

**Patentansprüche**

1. Verfahren zur Interaktion zwischen einem Benutzer und einem Multimedia-Inhalt über eine Berührungsschnittstelle, **dadurch gekennzeichnet, dass** es die folgenden Schritte aufweist:

- Anzeige (E2) auf der Schnittstelle mindestens einer Darstellung von Metadaten bezüglich der Gesamtheit des Multimedia-Inhalts, wobei die Darstellung mindestens eine zweidimensionale Intensitätskurve enthält, von der die eine ihrer Dimensionen einen Fortschritt im Multimedia-Inhalt und die andere ihrer Dimensionen eine Intensität darstellt, wobei die Kurve bezüglich von vordefinierten Kriterien definiert ist und Höhepunkte, die Nutzinformationen für den Benutzer entsprechen, und Tiefpunkte aufweist, die Informationen von geringerem Nutzen für den Benutzer entsprechen,
- wenn der Benutzer an mindestens zwei Punkten einen Kontakt mit der Schnittstelle herstellt, Ermittlung mindestens eines Höhepunkts der mindestens einen Intensitätskurve abhängig von der Lage dieser mindestens zwei Punkte auf der Schnittstelle und Auswahl mindestens eines Teils des Multimedia-Inhalts entsprechend diesem mindestens einen Höhepunkt (E33).

2. Verfahren nach Anspruch 1, **dadurch gekennzeichnet, dass**, wenn der Benutzer einen Kontakt mit der Schnittstelle an zwei Punkten herstellt, die sich auf einer Achse parallel zu der einen Fortschritt im Multimedia-Inhalt darstellenden Dimension befinden, der Teil des Multimedia-Inhalts, der zwischen den Schnittpunkten der mindestens einen Intensitätskurve mit den Achsen, die je durch diese Kontaktpunkte gehen und parallel zu der die Intensität darstellenden Dimension sind, enthalten ist, ausgewählt wird.

3. Verfahren nach Anspruch 1, **dadurch gekennzeichnet, dass** der Benutzer, wenn er einen Kontakt an einem Punkt der Schnittstelle herstellt, der kein Punkt der mindestens einen Intensitätskurve ist, auf den Teil des Multimedia-Inhalts zugreift, der sich im Bereich des Schnittpunkts der mindestens einen Intensitätskurve mit einer Achse befindet, die durch diesen Kontaktpunkt geht und parallel zu der die Intensität darstellenden Dimension ist.

4. Verfahren nach Anspruch 1, **dadurch gekennzeichnet, dass** der Benutzer mindestens einen Teil des Multimedia-Inhalts auswählen kann, der einer vordefinierten Größe entspricht, indem er Kontakte an einer beliebigen Anzahl von Punkten herstellt, die auf der Schnittstelle positioniert sind, und dann die Anzahl und die Positionierung dieser Kontaktpunkte variiert, bis er einen Teil des Multimedia-Inhalts der vordefinierten Größe erhält.

5. Verfahren nach Anspruch 1, **dadurch gekennzeichnet, dass**, wenn der Benutzer die mindestens eine Intensitätskurve durchläuft, die Strecke von einer Rückmeldung begleitet wird, deren Leistung es ermöglicht, die Höhepunkte der mindestens einen Kurve zu bestimmen.

6. Interaktionssystem zwischen einem Benutzer und einem Multimedia-Inhalt über eine Schnittstelle, **dadurch gekennzeichnet, dass** es die folgenden Module aufweist:

- Anzeige (M2), auf einer Schnittstelle, einer Darstellung von Metadaten bezüglich der Gesamtheit des Multimedia-Inhalts, wobei die Darstellung mindestens eine zweidimensionale Intensitätskurve enthält, von der eine ihrer Dimensionen einen Fortschritt im Multimedia-Inhalt und die andere ihrer Dimensionen eine Intensität darstellt, wobei die Kurve Höhepunkte aufweist, die Nutzinformationen für den Benutzer entsprechen, die im Multimedia-Inhalt enthalten sind und bezüglich vordefinierten Kriterien bestimmt werden,
- Auswahl (M5) mindestens eines Teils des Multimedia-Inhalts entsprechend mindestens einem Höhepunkt der mindestens einen Intensitätskurve, wobei der mindestens eine Höhepunkt abhängig von der Lage dieser mindestens zwei Punkte auf der Schnittstelle bestimmt wird, wobei der Modul angewendet werden kann, wenn der Benutzer an mindestens zwei Punkten einen Kontakt mit der Schnittstelle herstellt.

7. Computerprogrammprodukt, das Programmcodeanweisungen enthält, die auf einen computerlesbaren Träger aufgezeichnet oder von ihm übertragen werden, um die Schritte des Verfahrens nach Anspruch 1 durchzuführen, wenn das Programm von einem Computer angewendet wird.

**Claims**

1. Method for interaction between a user and a multimedia content via a touch interface, **characterized in that** it comprises the following steps:

   - display (E2) on said interface of at least one representation of metadata relating to all of the multimedia content, said representation comprising at least one two-dimensional intensity curve, one of its dimensions representing a progression in the multimedia content and the other of its dimensions representing an intensity, said curve being defined in relation to predefined criteria and comprising peaks corresponding to information that is useful to the user and dips corresponding to information of lesser use to the user,
   - when the user makes a contact with the interface at at least two points, determination of at least one peak of the at least one intensity curve according to the location of these at least two points on the interface and selection of at least a part of the multimedia content corresponding to this at least one peak (E33).

2. Method according to Claim 1, **characterized in that**, when the user makes a contact with the interface at two points situated on an axis parallel to the dimension representing a progression in the multimedia content, the part of the multimedia content contained between the intersections of the at least one intensity curve with the axes passing respectively through these points of contact and parallel to the dimension representing the intensity is selected.

3. Method according to Claim 1, **characterized in that**, when the user makes a contact at a point of the interface which is not a point of the at least one intensity curve, he or she accesses the part of the multimedia content situated at the intersection of the at least one intensity curve with an axis passing through this point of contact and parallel to the dimension representing the intensity.

4. Method according to Claim 1, **characterized in that** the user can select at least a part of the multimedia content corresponding to a predefined size by making contacts at any number of points positioned on the interface then by varying the number and the positioning of these points of contact until a part of the multimedia content of the predefined size is obtained.

5. Method according to Claim 1, **characterized in that**, when the user moves along the at least one intensity curve, the movement is accompanied by a feedback, the strength of which makes it possible to identify the peaks of the at least one curve.

6. System for interaction between a user and a multimedia content via an interface, **characterized in that** it comprises the following modules:

   - display (M2) on an interface of a representation of metadata relating to all of the multimedia content, said representation comprising at least one two-dimensional intensity curve, one of its dimensions representing a progression in the multimedia content and the other of its dimensions representing an intensity, said curve comprising peaks corresponding to information that is useful to the user present in the multimedia content and determined in relation to predefined criteria,

   selection (M5) of at least a part of the multimedia content corresponding to at least one peak of the at least one intensity curve, said at least one peak being determined according to the location of these at least two points on the interface, said module being capable of being implemented when the user makes a contact with the interface at at least two points.

7. Computer program product comprising program code instructions stored on or transmitted by a computer-readable medium, to implement the steps of the method according to Claim 1 when said program is run by a computer.

E1 — Indexation

E2 — Affichage

Accès par point clé — E31

Accès par courbe d'intensité — E32

Sélection — E33

E3

**Fig. 1**

**Fig. 2a**

**Fig. 2b**

**Fig. 2c**

**Fig. 2d**

**Fig. 3**

**Fig. 4**

Fig. 5

Fig. 6

**Fig. 7**

**Fig. 8**

M1

M2

M3                        M4                M5

**Fig. 9**

**EP 2 239 740 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1377047 A2
- US 7362946 B1
- US 20070266322 A1